# EUROPEAN PATENT APPLICATION

(11) **EP 1 980 376 A1**
(43) Date of publication of application: **15.10.2008**
(21) Application number: 08005917.3
(22) Date of filing: 27.03.2008
(51) Int. Cl.: B26D 1/06, B26D 3/10, B26D 1/10

(54) **Cutting station and production method for cutting and producing three-dimensional pieces with a thin wall**

(30) Priority: 12.04.2007 IT MI20070738
(71) Applicant: Persico S.p.A., 24027 Nembro (BG) (IT)
(72) Inventor: Ambrosini, Paolo, 24021 Albino (BG) (IT)
(74) Representative: Faraggiana, Vittorio

(57) **Abstract**

A cutting station (10) for finishing a three-dimensional moulded piece with a thin wall, comprises a support (12) for a piece to be finished and an articulated robot arm (13) that carries a cutting tool with an oscillating blade (14) for movement thereof according to six axes. A movement executing unit (15) is connected to the robot arm to command the movement thereof in space and a movement data generating unit (16) is connected to the executing unit to provide the robot arm with the arm movement data. The generating unit (16) comprises storage means for storing a three-dimensional mathematical model of the piece to be finished and a mathematical model of the robot arm, and calculating means that is suitable for calculating, from the stored models, a virtual trajectory of the blade on the mathematical model of the piece at a particular angulation. The executing unit (15) receives the robot arm movement data and makes the blade work physically on the actual piece on the support. Also a production method for producing a three-dimensional moulded piece with a thin wall is disclosed.

## Description

The present invention relates to a cutting station and to a production method for cutting and producing three-dimensional pieces with a thin wall.

The general object of the present invention is to overcome the drawbacks of the prior art, by providing an innovative cutting station that enables moulded pieces with a three-dimensional shape and thin wall to be finished in a simple and fast manner, without, for example, requiring point-by-point automatic tool programming. A further object of the invention is to provide a method to enable moulded pieces with a three-dimensional shape and thin wall to be produced relatively cheaply.

In view of this object it has been decided to devise, according to the invention, a cutting station for finishing a three-dimensional moulded piece with a thin wall, comprising a support for a piece to be finished, a cutting tool with an oscillating blade, an articulated robot arm carrying said cutting tool for movement thereof according to six axes, a movement executing unit connected to said robot arm to command movement thereof in space, a movement data generating unit connected to the executing unit for providing the executing unit with arm movement data, the generating unit comprising storage means for storing a three-dimensional mathematical model of the piece to be finished and a mathematical model of the robot arm, calculating means suitable for calculating, from the stored models, a virtual trajectory of the blade on the mathematical model of the piece with preset blade yaw, pitch and roll angles with respect to the model for executing finishes defined in the mathematical model of the piece and transferring means for transferring to the executing unit the trajectory calculated in the form of movement data of the robot arm that makes the blade work physically on the actual piece on the support.

Also according to the invention, it has been decided to devise a method for producing a three-dimensional moulded piece with a thin wall, comprising the steps of moulding a preform of the piece to be finished by means of cutting and removing material to obtain the desired piece, placing the preform on a support in a finishing station comprising a robot arm articulated on six axes and carrying a cutting tool with an oscillating blade, calculating from a mathematical model of the piece and from a mathematical model of the robot arm a virtual movement trajectory of the blade on the model with preset blade yaw, pitch and roll angles with respect to the model for executing finishes defined by the mathematical model, transferring to an executing unit the trajectory calculated in the form of robot arm movement data to make the blade work the piece physically on the support, maintaining during movement the preset blade yaw, pitch and roll angles in relation to the actual piece to be finished.

In order to make clearer the explanation of the innovative principles of the present invention and the advantages thereof over the prior art, with the help of the attached drawings a possible embodiment applying such principles will be disclosed below with the attached drawings. In the drawings:
- figure 1 is a perspective schematic view of a cutting station according to the invention;
- figure 2 is a block diagram of the electronic control system of the station in figure 1;
- figure 3 is an enlarged and perspective end view of a cutting tool of the station;
- figure 4 is a front view of the end of the tool in figure 3 with an advantageous constructional version.

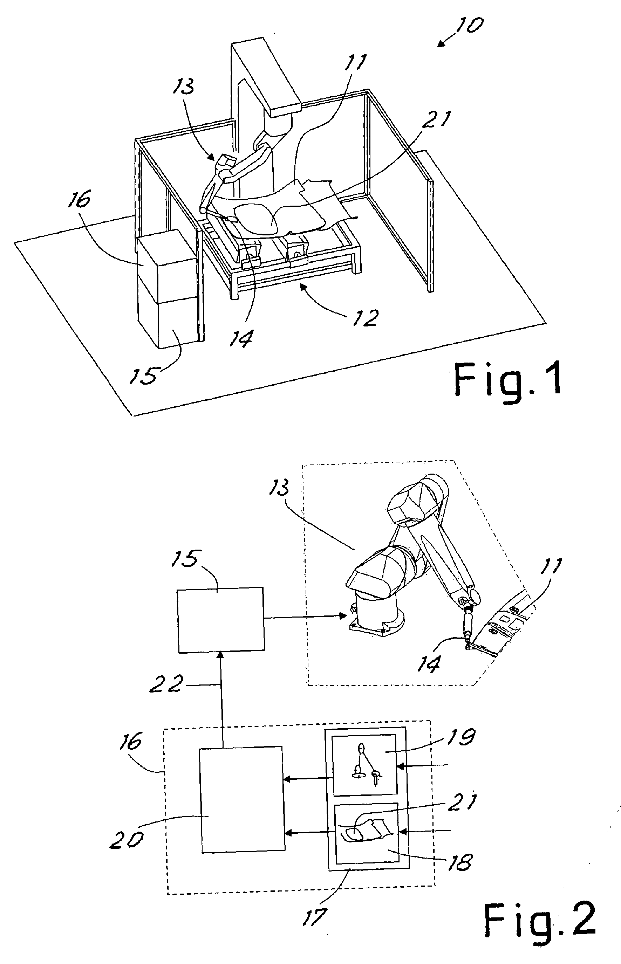

With reference to the figures, in figure 1 there is schematically shown a cutting station, indicated generally by 10, for finishing a three-dimensional moulded piece 11 with a thin wall. The term "thin wall" indicates that at least the zones to be subjected to cutting have a sufficiently small thickness to be cuttable with an oscillating blade. The pieces are advantageously typical automobile parts such as roof panels, mats, door panels and other interior fittings of motor vehicles. These pieces are normally moulded from plastics or a stratified composite and often enable trimming or further cutting and blocking-out operations of details to be performed. In the prior art it is often necessary to use different moulds to be able to produce versions thereof and which differ only through the loss of certain zones or through the presence of different points of the surface. With the system according to the inventions it is possible to use just one mould for such pieces, using the cutting station to produce the versions automatically.

The station 10 comprising a support 12 for the piece to be finished. The support will vary according to the shape of the piece and according to the position that it is desired that the piece should take up in the station. Supports with suitable features for maintaining with precision the position of moulded pieces are easily imaginable by those skilled in the art and will not be further shown or disclosed here.

The station 10 also comprises an articulated robot arm 13 carrying a cutting tool with an oscillating blade 14. As will become clear below, the robotised arm 13 is suitable for moving the cutting tool according to six axes to enable any positioning of the blade in the operating space. Advantageously, the robot arm is of the anthropomorphic type, although a Cartesian system can also be used.

In figure 2 the electronic control system of the station is shown in greater detail. A movement execution unit 15 is thus obtained that is connected to the robot arm 13 to command movement thereof in space. This executing unit translates the arm movement data into coordinated movements of the single axes of the robot, the arm movement data are generally in terms of positions that the blade of the tool 14 is to be made to take up.

In order to obtain these data, there is a movement data generating unit 16 that is connected to the executing unit 15 for providing the executing unit 15 with the desired arm movement data. The generating unit 16 comprises storage means 17 for storing a three-dimensional mathematical model 18 of the piece to be finished. This model can be easily provided by normal CAD design features and be transferred to the storage means. Into the storage means there is also inserted a mathematical model 19 of the robot arm. This model is obtained with known means from the kinematics of the actually used arm.

In the generating unit there is also calculating means 20 that is suitable for calculating, from the models stored in the means 17, a virtual trajectory of the blade on the mathematical model of the piece with preset blade yaw, pitch and roll angles with respect to this model to execute finishes defined in the mathematical model of the piece. For example, the mathematical model can provide a slot 21 in the piece that is not produced during the piece moulding process and has to be cut by the station 10. The generating unit, owing to the mathematical models of the arm and of the piece, thus runs a virtual simulation of the cutting operations, producing movement data without the need for point-by-point programming of the tool movements. All this enables off-line programming, without using the mechanical structure of the robot. Changing the workpiece is thus enormously facilitated, as the mathematical model of the new piece simply has to be loaded into the system. This enables even small adjustments between one embodiment and another of a basic preform produced by previous machinings to be made efficiently.

The generating unit 16 and the executing unit 15 are connected by the transferring means 22 to the executing unit the trajectory calculated in the form of robot arm movement data to make the blade work physically on the actual piece on the support. The virtual machining produced by the generating unit on the mathematical model of the piece is thus transformed into real machining on the actual workpiece. The data can be transferred by a network connection or another data transfer connection between the robot control unit and the generating unit, made advantageously in the form of a suitably programmed computer (industrial or a personal computer).

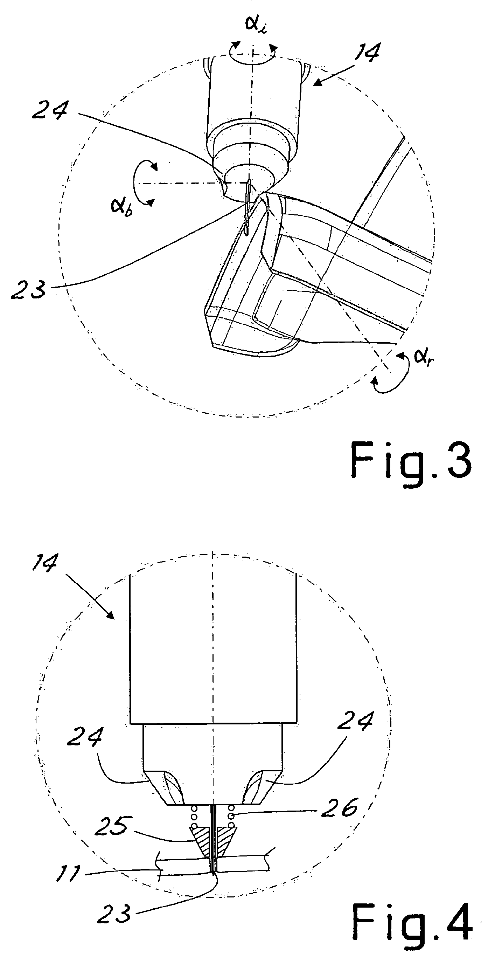

In figure 3 there is schematically shown the cutting end of the tool 14. This tool comprises a cutting blade 23 that is made to oscillate in an axial direction by a pneumatic or electric drive (advantageously pneumatic) with a stroke that it has been found advantageous to maintain between 1 and 40 mm, also depending on the wall to be cut and at an oscillating frequency between 5000 and 25000 cycles per minute.

As can always been seen in figure 3, for the blade there is definable in the space a yaw angle αᵢ, (i.e. a blade rotation angle around the main axis thereof with respect to the movement direction of the tool along the cutting trajectory), a pitch angle α_{b}, (i.e. a blade striking angle with respect to the surface that is being cut, or, in other words, the forward or rear tilt of the blade with respect to the normal tilt in relation to the surface of the piece at the cutting point) and a roll angle αᵣ, (i.e. an angle of lateral tilt to the right or left still with respect to the normal tilt in relation to the surface of the piece at the cutting point).

Advantageously, the movement data generating unit maintains a yaw angle with respect to the trajectory on the surface that is equal to zero, so that the side plane of the blade (which is flat and relatively wide) is always tangential to the trajectory, so as to avoid twisting and breakage of the blade, whereas it has been found to be advantageous to set the pitch angle with respect to the cut surface as a value that is preset in function of the material of the piece to be cut. This value can be coded according to the material and the thickness thereof or be detected experimentally during test cuttings before machinings are started up.

The roll angle, on the other hand, depends on the mathematical model of the piece, corresponding to the tilt, which in the model is provided for the produced cutting edge.

In figure 4, there is shown an advantageous embodiment of the end of the tool. It has above all been found to be advantageous for the end of the tool from which the blade 23 protrudes to be reduced to a dimension around 10 mm by means of a taper 24 of the end. Further, it has been found to be particularly advantageous for the tool to be provided with a sliding element 25 on the blade which is pushed by a spring 26 to the end of the blade to react against the surface of the piece subjected to cutting. In this manner, it has been found that cutting vibrations are reduced in an excellent manner that could alter machining precision.

At this point it is clear how the objects of the invention have been achieved. With the cutting station disclosed above, the method for producing a three-dimensional moulded piece made with composite or plastic materials with a thin wall is easily applicable, this method comprises the steps of moulding a preform of such a piece, finishing the piece by cutting and removing material to obtain the desired piece. This enables great production economy compared, for example, with making moulds with all the versions provided for the same base piece. Once the base piece has been moulded, or preformed, it is placed on the support in the finishing station 10 which is provided with the cutting tool with an oscillating blade and which can finish the piece starting from the mathematical model that is supplied to the station.

The system according to the invention enables the path of the "off-line" cut to be programmed without a "self-teach" process on the field, but owing to a virtual simulation that optimises the downtime of the station.

The system input data are the mathematical plotting of the piece to be cut and the features of the used robot (anthropomorphic or Cartesian as the case may be).

The station according to the invention enables one or more external layers of a stratified panel to be cut quickly without cutting the layers underneath. For example, this may be useful for the cladding panels used in the automobile industry, formed by a structure towards the sheet metal side coupled with a fabric or other cladding material on the visible side. Advantageously, the penetrating precision of the oscillating blade is guaranteed, without any need to diminish cutting speed, by using the sliding element or elastic presser 25, which, for example, exploits the stiffness of the structure of the piece ("sheet metal" side) and the soft cladding layer (often to a few millimetres on the visible side). This presser is arranged near the blade and stabilises penetration and ensures the same maximum cutting depth length going to rest on the piece and partially recovering any imprecision's of the cutting path.

Naturally, the description made above of an embodiment applying the innovative principles of the present invention is provided merely by way of example of the innovative principles thereof and must not therefore be taken to limit the scope of what is claimed herein.

## Claims

1. Cutting station for finishing a three-dimensional moulded piece with a thin wall, comprising a support for a piece to be finished, a cutting tool with an oscillating blade, an articulated robot arm carrying said cutting tool for movement thereof according to six axes, a movement executing unit connected to said robot arm to command movement thereof in space, a movement data generating unit connected to the executing unit to provide the executing unit with arm movement data, the generating unit comprising storage means for storing a three-dimensional mathematical model of the piece to be finished and a mathematical model of the robot arm, calculating means suitable for calculating, from the stored models, a virtual trajectory of the blade on the mathematical model of the piece with preset blade yaw, pitch and roll angles with respect to the model to execute finishes defined in the mathematical model of the piece and transferring means for transferring to the executing unit the trajectory calculated in the form of robot arm movement data that make the blade work physically on the actual piece on the support.

2. Cutting station according to claim 1, **characterised in that** the yaw angle in relation to the trajectory on the surface is maintained equal to zero and the pitch angle with respect to the cut surface is a value that is preset in function of the material of the piece to be cut.

3. Cutting station according to claim 1, **characterised in that** the tool has an oscillating blade with a stroke comprised between 1 and 40 mm and an oscillating frequency between 5000 and 25000 cycles per minute.

4. Cutting station according to claim 1, **characterised in that** the tool is pneumatic.

5. Cutting station according to claim 1, **characterised in that** the tool has an edge from which the blade protrudes that is reduced to a dimension around 10 mm.

6. Cutting station according to claim 1, **characterised in that** the tool has an element that is slidable on the blade and is pushed by a spring to the end of the blade to react against the surface of the piece subjected to cutting.

7. Cutting station according to claim 1, **characterised in that** the robot arm is Cartesian or anthropomorphic.

8. Method for producing a three-dimensional moulded piece with a thin wall, comprising the steps of moulding a preform of the piece to be finished by means of cutting and removing material to obtain the desired piece, placing the preform on a support in a finishing station comprising a robot arm articulated on six axes and carrying a cutting tool with an oscillating blade, calculating from a mathematical model of the piece and from a mathematical model of the robot arm a virtual movement trajectory of the blade on the model with preset blade yaw, pitch and roll angles with respect to this model for executing finishes defined by the mathematical model, transferring to an executing unit the trajectory calculated in the form of robot arm movement data to make the blade machine the piece physically on the support, maintaining during movement the preset blade yaw, pitch and roll angles in relation to the actual blade to be finished

9. Method according to claim 8 in which the three-dimensional moulded piece is made layered and the cutting tool is led along the cutting trajectory to penetrate with the oscillating blade only one or more external layers without cutting the layers underneath.

10. Method according to claim 9 in which the stabilisation of the penetration of the blade in the outer layers of the piece is obtained by a pressing element on the tool near the blade and which rests elastically on the piece.
